# EUROPEAN PATENT APPLICATION

(11) **EP 4 664 027 A1**
(43) Date of publication of application: **17.12.2025**
(21) Application number: 25182216.9
(22) Date of filing: 12.06.2025
(51) Int. Cl.: F24F 8/80, F24F 13/28, F24F 8/108, F24F 13/08, F24F 13/20

(54) **AIR PURIFIER**

(30) Priority: 13.06.2024 KR 20240077102
(71) Applicant: LG Electronics Inc., Yeongdeungpo-gu Seoul 07336 (KR)
(72) Inventor: MUN, Yeongcheol, Seoul (KR); KIM, Sukchun, Seoul (KR); OH, Jihye, Seoul (KR)
(74) Representative: Schornack, Oliver

(57) **Abstract**

The present disclosure relates to an air purifier.

The air purifier of the present disclosure includes: a body having an inlet formed on an circumference surface thereof and an outlet formed on an upper surface thereof, and a booster disposed at an upper side of the body, and discharging air in one direction on the circumference surface through a booster outlet. The body includes a fan disposed inside the body and making air flow from the inlet to the outlet, a fan housing having a space in which the fan is disposed, a filter disposed at a lower side of the fan housing, and filtering air introduced through the inlet, and a filter frame extended to a lower side from the fan housing, and supporting a space in which the filter is disposed. The filter frame is disposed to withdraw the filter in a direction faced by the booster outlet.

## Description

### CROSS-REFERENCE TO RELATED APPLICATION

This application claims the benefit of and priority to Korean Patent Application No. 10-2024-0077102, filed in Korea on June 13, 2024, the entire disclosure(s) of which is hereby incorporated herein by reference in its entirety.

### TECHNICAL FIELD

The present disclosure relates to an air purifier, and more particularly, to an air purifier including a booster.

### BACKGROUND

An air purifier is a device that filters and discharges air inside a predetermined space to reduce dust and bacteria in the air in the corresponding space. The air purifier filters out foreign substances through an air flow in the corresponding space and discharges air from which the foreign substances are removed.

In order to suck the air in a wide range of the corresponding space and to discharge the filtered air, it is possible to initiate a structure of forming an inlet on a circumference surface of a cylindrical case, and discharging the filtered air to the top. However, a device which switches a separate flow to a top to which the filtered air is discharged is provided in order to discharge the filtered air to a long-distance area of the corresponding space to discharge the filtered air to a wide area of an indoor space.

Korean Patent Unexamined Publication No. 10-2018-0000121 discloses a blowing device which makes the air flow to the top from a lower circumferential surface, and a booster which is disposed above the blowing device and switches the flow of the air discharged to the top.

The air discharged through the booster can be installed indoors to face an indoor space. Accordingly, an opposite direction to a direction faced by the booster can be disposed to face a wall surface or a corner of the indoor space. At this time, when an area to withdraw a filter is different from the direction faced by the booster, a user has to withdraw or introduce the filter by changing an overall layout of the air purifier, so it is inconvenient.

### SUMMARY

In view of the above, the present disclosure solves the above-described problems and other problems.

Another object of the present disclosure is to provide convenience for a user to replace a filter in a space in which an actual purifier is installed.

Yet another object of the present disclosure is to provide an air purifier in which a cover covering the filter is also simply separated.

Still yet another object of the present disclosure is to provide an air purifier in which an area exposed to the outside of an electrical wire is disposed adjacent to an outlet of a wall surface.

Still yet another object of the present disclosure is to provide an air purifier having a structure in which the user can also conveniently separate a booster or an outlet cover.

In order to achieve the objects, the present disclosure provides an air purifier including: a body having an inlet formed on an circumference surface thereof and an outlet formed on an upper surface thereof; and a booster disposed on the body and configured to discharge air toward one side in a circumferential directionthrough a booster outlet.

The body includes a fan disposed in the body and making the air flow from the inlet to the outlet, and a fan housing having a space in which the fan is disposed. The body includes a filter frame extending downward from the fan housing, and supporting a space in which a filter is disposed.

The filter frame is disposed to withdraw the filter in a direction faced by the booster outlet.

The filter frame includes a rear frame disposed in a direction opposite to the direction faced by the booster outlet, and a pair of side frames disposed to be spaced apart from the rear frame in a circumferential direction and to be symmetric to each other to the left and right.

The body further includes a first inlet cover disposed at a front side of the filter and having the inlet, and a second inlet cover disposed at a rear side of the filter and having the inlet.

Each of the first inlet cover and the second inlet cover is individually mounted on the fan housing.

The first inlet cover is disposed toward a front side in direction in which the filter is withdrawn.

Both ends of the first inlet cover are disposed to face the one pair of side frames, respectively.

The body includes a booster coupler configured to couple or decouple the booster.

When the booster is coupled to the booster coupler, the booster outlet is disposed to face the front.

When the booster is coupled to the booster coupler, the booster outlet is formed to be inclined upward.

The booster coupler rotates the booster within a range of each of the pair of side frames.

The booster coupler includes a second support body, and a first support body rotatably disposed on the second support body and connected to the booster.

A rack supporting movement of the first support body is formed to the rear on an inner peripheral surface of the second support body.

The body further includes an outlet cover disposed on a circumference of the booster coupler, and having the outlet.

The outlet cover is coupled to the booster coupler through a fastener disposed in front of the booster coupler.

The outlet cover is fastened to the second support body through the fastener.

The body further includes a base disposed at a lower portion of the body. An electrical wire hole penetrated by an electrical wire in a direction opposite to the direction faced by the booster outlet is disposed on the base.

The body includes a control box having electronic parts disposed therein. A filter pressing plate pressing one side of the filter is disposed in the control box.

The rear frame has a space penetrated by the electrical wire.

Details of other embodiments will be included in the detailed description and the accompanying drawings.

### ADVANTAGEOUS EFFECTS

According to the air purifier of the present disclosure, there are one or more of the following effects.

First, a direction faced by a booster can be introduced or withdrawn. This has an advantage in that a filter can be replaced in a space primarily used by a user, so the convenience of the user is increased.

Second, there is also an advantage in that since an inlet cover is separated forward, only the inlet cover disposed forward, so the filter can be easily replaced.

Third, an electrical wire hole is disposed on a base in an opposite direction to the direction faced by the booster. That is, there is also an advantage in that since an area to which an electrical wire is exposed is disposed in a direction facing a wall surface or a corner, the electrical wire can be disposed close to an outlet disposed on the wall surface.

The effects of the present disclosure are not limited to the aforementioned effect, and other effects, which are not mentioned above, will be apparent to a person having ordinary skill in the art from the description of the claims.

### BRIEF DESCRIPTION OF THE DRAWINGS

Fig. 1 is a perspective view of an air purifier according to an embodiment of the present disclosure.
Fig. 2 is a perspective view of an air purifier according to an embodiment of the present disclosure in which a booster is separated from a body.
Fig. 3 is a cross-sectional view of the air purifier according to an embodiment of the present disclosure.
Fig. 4 is a perspective view of the booster according to an embodiment of the present disclosure.
Fig. 5 is an exploded perspective view of the booster according to an embodiment of the present disclosure.
Fig. 6 is a cross-sectional view of the booster according to an embodiment of the present disclosure.
Fig. 7 is a rear perspective view of the booster according to an embodiment of the present disclosure.
Fig. 8 is a diagram for describing a booster coupler and an upper outlet cover according to an embodiment of the present disclosure.
Fig. 9 is a cross-sectional view of the booster coupler and the upper outlet cover taken along one side according to an embodiment of the present disclosure.
Fig. 10 is a perspective view of a state in which an inlet cover is separated from the air purifier according to an embodiment of the present disclosure.
Fig. 11 is a side view of a state in which the inlet cover and a filter are separated from the air purifier according to an embodiment of the present disclosure.
Fig. 12 is a perspective view of the inlet cover according to an embodiment of the present disclosure.
Fig. 13 is one side view of the inlet cover according to an embodiment of the present disclosure.
Fig. 14 is a cross-sectional view taken along XIV-XIV' of Fig. 13.
Fig. 15 is a front view of the state in which the inlet cover is separated from the air purifier according to an embodiment of the present disclosure.
Fig. 16 is an enlarged diagram of part A of Fig. 15.
Fig. 17 is an enlarged diagram of part B of Fig. 16.
Fig. 18 is an enlarged diagram of part C of Fig. 16.
Fig. 19 is a cross-sectional view of a base according to the embodiment of the present disclosure.

### DETAILED DESCRIPTION

Advantages and features of the present disclosure, and methods for accomplishing the same will be more clearly understood from embodiments described in detail below with reference to the accompanying drawings. However, the present disclosure is not limited to embodiments disclosed below but may be implemented in various different forms. However, the exemplary embodiments are provided to make the present disclosure complete and completely announce the scope of the present disclosure to those skilled in the art to which the present disclosure belongs. The present disclosure is defined only by the scope of the claims. Throughout the present disclosure, the same reference numerals denote the same elements.

Hereinafter, the present disclosure will be described with reference to drawings for describing an air purifier according to embodiments of the present disclosure.

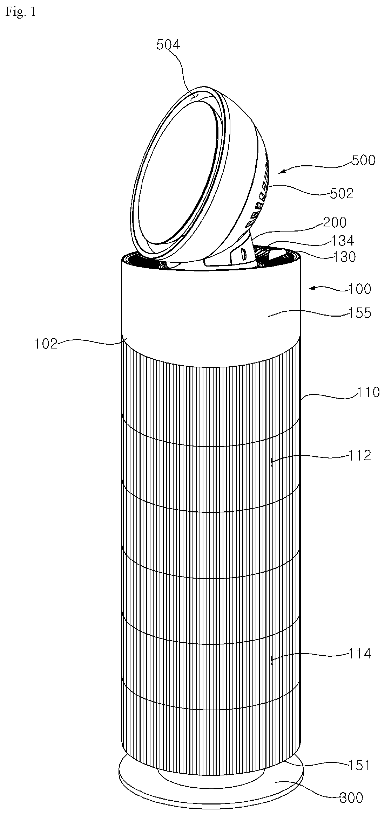

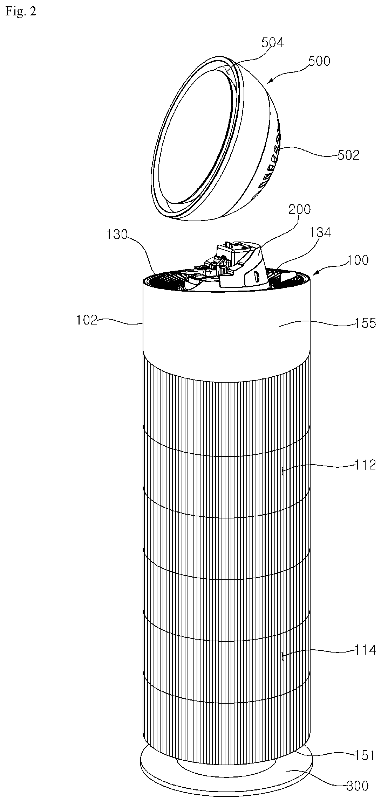

Fig. 1 is a perspective view of an air purifier according to an embodiment of the present disclosure. Fig. 2 is a perspective view of a state in which a booster is separated from a body in Fig. 1. An appearance of the air purifier according to the present disclosure is described with reference to Figs. 1 and 2.

The air purifier includes a body 100 in which air is sucked through inlets 112 and 114 formed on a circumferential surface, and the air is discharged through an upper outlet 134 formed on an upper surface. A lower outlet 151 is also formed on a lower surface in the body 100.

The air purifier may include a booster 500 which is disposed at an upper side of the body 100, and switches a flow direction of the air discharged through the upper outlet 134 of the body 100.

The body 100 includes a case 102 forming an exterior. A filter which filters the sucked air and a fan which forms air flowing may be disposed inside the case 102.

The case 102 has a substantially cylindrical structure. The case 102 has the inlets 112 and 114 formed on a circumferential surface thereof in the cylindrical structure. The case 102 has the upper outlet 134 formed on an upper surface thereof. The case 102 has the lower outlet 151 formed on a lower surface thereof.

The case 102 includes an inlet cover 110 which has the inlets 112 and 114. The inlets 112 and 114 include an upper inlet 112 and a lower inlet 114 located below the upper inlet 112. The upper inlet 112, and the lower inlet 114 disposed below the upper inlet 112 are formed in the inlet cover 110.

The case 102 includes an upper outlet cover 130(or "outlet cover") which has the upper outlet 134. A booster coupler 200 is disposed inside the upper outlet cover 130.

The case 102 includes a lower outlet cover 150 which has the lower outlet 151.

The case 102 includes an upper cover 155 disposed between the inlet cover 110 and the upper outlet cover 130. The upper cover 155 is disposed above the inlet cover 110. An upper discharge path 156 to be described below may be formed inside the upper cover 155.

The body 100 includes a base 300 which separates the case 102 to an upper side from a bottom surface. The base 300 may separate the lower outlet 151 formed in the case 102 to an upper side from a bottom.

The booster coupler 200 coupled to the booster 500 is disposed at an upper portion of the body 100. The booster coupler 200 is disposed inside the upper outlet 134 formed on the upper surface of the body 100. The upper outlet 134 is formed in an annular shape. The booster coupler 200 is disposed inside the upper outlet 134 formed in the annular shape.

The booster 500 is separably disposed at the upper portion of the body 100. Accordingly, the booster 500 may be fixedly disposed at the upper portion of the body 100 as illustrated in Fig. 1, or separated to the upper side from the body 100 as illustrated in Fig. 2.

The booster 500 may be disposed inclinedly to the upper surface of the body 100. A booster inlet 502 and a booster outlet 504 are formed in the booster 500. The booster inlet 504 is formed in a different direction from the booster inlet 502. The booster outlet 504 is formed in an opposite direction to the booster inlet 502.

Referring to Fig. 1, the booster 500 may be coupled to the booster coupler 200. The booster 500 may be electrically connected to the body 100 when being coupled to the booster coupler 200.

Referring to Fig. 2, the booster 500 may be separated from the booster coupler 200.

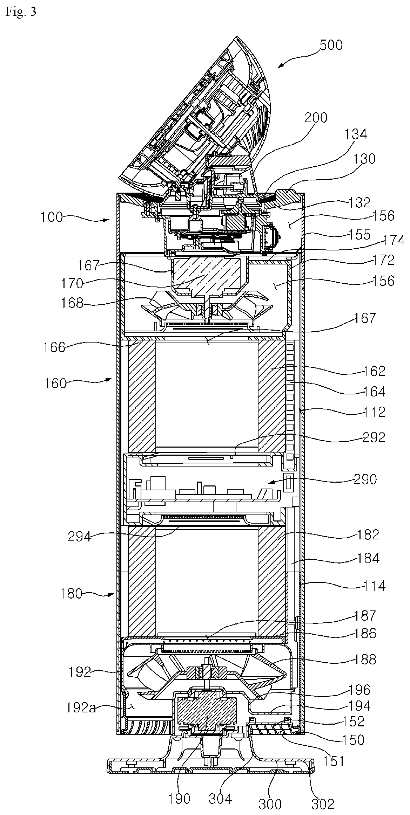

Fig. 3 is a cross-sectional view of the air purifier according to an embodiment of the present disclosure. Hereinafter, an overall configuration of the air purifier will be described with reference to Fig. 3.

The air purifier of the present disclosure includes a body 100 which discharges filtered air to an upper side or a lower side, and a booster 500 which is disposed at the upper side of the body 100 and switches a flow direction of the air discharged to the upper side.

The body 100 includes a case 102 forming an external shape. The case 102 includes an upper outlet cover 130 disposed on an upper surface of the body 100, and a lower outlet cover 150 disposed on a lower surface of the body 100.

The upper outlet cover 130 may be formed in an annular plate shape. An upper outlet 134 opened to the upper side is formed on the upper outlet cover 130. The upper outlet cover 130 includes a plurality of upper outlet grills 132 extended radially. The upper outlet 134 may be formed between the plurality of upper outlet grills 132.

A booster coupler 200 is disposed inside the upper outlet cover 130.

The lower outlet cover 150 may be formed in the annular plate shape. An upper outlet 151 opened to the lower side is formed on the lower outlet cover 150. The lower outlet cover 150 includes a plurality of lower outlet grills 152 extended radially. The lower outlet 151 may be formed between the plurality of lower outlet grills 152.

A base 300 or a lower fan motor 190 is disposed inside the lower outlet cover 150.

The case 102 includes an inlet cover 110 which has the inlets 112 and 114. The inlet cover 110 has an upper inlet 112 and a lower inlet 114.

The case 102 includes an upper cover 155 disposed above the inlet cover 110.

The body 100 includes an upper blowing device 160 which filters air introduced through the upper inlet 112 and discharges the filtered air through the upper outlet 134.

The upper blowing device 160 sends air introduced through a circumferential surface to the upper side. The upper blowing device 160 includes an upper filter 162 (or "filter")which filters the air introduced through the upper inlet 112.

The upper filter 162 has a cylindrical shape. Accordingly, the upper filter 162 filters air which flows from the outer side to the inner side of the circumferential surface.

The upper blowing device 160 includes an upper filter frame 164(or "filter frame") which has a space in which the upper filter 162 is disposed. The upper filter frame 164 is disposed above a control box 290 described below.

The upper filter frame 164 is extended above the control box 290. The upper filter frame 164 connects the control box 290, and an upper suction panel 166 to be described below. A plurality of upper filter frames spaced in a circumferential direction may be disposed between the control box 290 and the upper suction panel 166.

The upper blowing device 160 includes an upper suction panel 166 disposed above the upper filter 162 and having an upper orifice 167. The upper suction panel 166 is disposed above the upper filter 162. The upper orifice 167 in which air passing through the upper filter 162 flows is formed at a center of the upper suction panel 166.

The upper blowing device 160 includes an upper fan 168 (or "fan") discharging the air passing through the upper filter 162 through the upper outlet 134 and an upper fan motor 170 rotating the upper fan 168.

The upper fan 168 may be a structure in which a fan suction port is formed at a lower side and a fan discharge port is formed at an upper side. The fan discharge port may be opened to radial outer and upper sides. Air may flow from the lower side of the upper fan 168 to the upper side of the upper fan 168 by rotation of the upper fan 168.

The upper blowing device 160 includes an upper fan housing 172 (or "fan housing") having a space in which the upper fan 168 is disposed and a discharge path formed above the upper fan 168.

The upper blowing device 160 includes an upper motor housing 176 having a space in which the upper fan motor 170 is disposed. An upper guide vane 174 connected to the upper motor housing 176 may be disposed at an upper portion of the upper fan housing 172. The upper guide vane 174 may have a form of being disposed between the upper fan housing 172 and the upper motor housing 176, and extended radially.

The upper guide vane 174 may reduce rotation components of air which flows to the upper side of the upper fan housing 172.

An upper discharge path 156 is formed between the upper motor housing 176 and the upper fan housing 172. The upper discharge path 156 may have an annular path and have a form of being extended to the upper side.

The body 100 includes the upper cover 155 disposed above the inlet cover 110. The upper cover 155 has the cylindrical shape. The upper discharge path 156 may be extended to an inner side of the upper cover 155.

The booster coupler 200 is disposed at the inner side of the upper cover 155. The upper discharge path 156 may be formed between the upper cover 155 and the booster coupler 200. The booster coupler 200 may maintain a range in which the booster 500 is inclined to the upper side.

The booster coupler 200 is coupled to the booster 500. The booster coupler 200 may rotate the booster 500 in a circumferential direction. That is, the booster coupler 200 may change a direction faced by the booster 500 to the circumferential direction.

The upper outlet cover 130 is disposed at upper ends of the upper cover 155 and the booster coupler 200.

The body 100 includes a lower blowing device 180 which filters the air introduced through the lower inlet 114 and discharges the filtered air through the lower outlet 151.

The lower blowing device 180 sends air introduced through a circumferential surface to the lower side. The lower blowing device 180 includes a lower filter 182 which filters the air introduced through the lower inlet 114.

The lower filter 182 has the cylindrical shape. Accordingly, the lower filter 182 filters air which flows from the outer side to the inner side of the circumferential surface.

The lower blowing device 180 includes a lower filter frame 184 which has a space in which the lower filter 182 is disposed. The lower filter frame 184 is disposed below the control box 290 described below.

The lower filter frame 184 is extended below the control box 290. The lower filter frame 184 connects the control box 290, and a lower suction panel 186 to be described below. A plurality of lower filter frames spaced in the circumferential direction may be disposed between the control box 290 and the lower suction panel 186.

The lower blowing device 180 includes a lower suction panel 186 disposed above the lower filter 182 and having a lower orifice 187. The lower suction panel 186 is disposed above the lower filter 182. The lower orifice 187 in which air passing through the lower filter 182 flows is formed at a center of the lower suction panel 186.

The lower blowing device 180 includes a lower fan 188 discharging the air passing through the lower filter 182 through the lower outlet 151 and a lower fan motor 190 rotating the lower fan 188.

The lower fan 188 may be a structure in which the fan suction port is formed at an upper side and the fan discharge port is formed at a lower side. The fan discharge port may be opened to radial outer and lower sides. Air may flow from the upper side of the lower fan 188 to the lower side of the lower fan 188 by rotation of the lower fan 188.

The lower blowing device 180 includes a lower fan housing 192 having a space in which the lower fan 188 is disposed and a discharge path formed above the lower fan 188.

The lower blowing device 180 includes a lower motor housing 196 which has a space in which the lower fan motor 190 is disposed. A lower guide vane 194 connected to the lower motor housing 196 may be disposed at a lower portion of the lower fan housing 192. The lower guide vane 194 may have a form of being disposed between the lower fan housing 192 and the lower motor housing 196, and extended radially.

The lower guide vane 194 may reduce rotation components of air which flows to the lower side of the lower fan housing 192.

A lower discharge path 192a is formed between the lower motor housing 196 and the lower fan housing 192. The lower discharge path 192a may have the annular path and have a form of being extended to the lower side.

The lower outlet cover 150 may be disposed between the lower motor housing 196 and the lower fan housing 192.

The body 100 includes the control box 290 disposed between the upper blowing device 160 and the lower blowing device 180, and having electronic parts disposed therein. A printed circuit board which operates the upper fan 168 or the lower fan 188 may be disposed inside the control box 290.

An upper pressing plate 292(or "filter pressing plate") which is in contact with a lower surface of the upper filter 162 is disposed at an upper portion of the control box 290. The upper pressing plate 292 is disposed in the control box 290 to be movable in upper and lower directions. When the upper filter 162 is disposed above the upper pressing plate 292, the upper pressing plate 292 may move to the lower side.

A lower pressing plate 294 which is in contact with an upper surface of the lower filter 182 is disposed at a lower portion of the control box 290. The lower pressing plate 294 is disposed in the control box 290 to be movable in the upper and lower directions. When the upper filter 182 is disposed below the lower pressing plate 294, the lower pressing plate 294 may move to the upper side.

Whether the upper filter 162 is placed may be determined according to the placement of the upper pressing plate 292. Whether the lower filter 182 is placed may be determined according to the placement of the lower pressing plate 294.

The body 100 includes a base 300 which separates the lower outlet 151 to the upper side from the bottom. The base 300 includes a base plate 302 which is separated to the lower side of the lower outlet 151, and a base support 304 which separates the base plate 302 to the lower side from the lower outlet 151.

The base support 304 is extended to the upper side of the base plate 302. The base support 304 may be coupled to a lower surface of the lower motor housing 196.

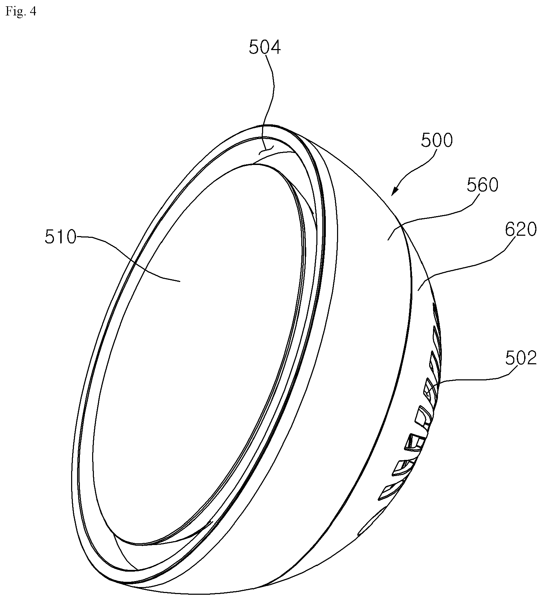

Referring to Fig. 4, an external shape of the booster is described.

The booster 500 has a booster inlet 502 formed at one side and a booster outlet 504 formed at the other side. The booster 500 may have a substantially hemispherical shape.

The booster 500 has a booster fan 550 disposed therein. Accordingly, the booster 500 may switch a direction of the air which flows to the upper side through the upper outlet 134 of the body 100.

The booster outlet 504 may be formed in the annular shape. The booster outlet 504 may be formed in a different direction from the booster inlet 502. The booster outlet 504 may be formed in an opposite direction to the booster inlet 502.

The booster 500 includes a front body 510. The front body 510 is disposed at an inner side of the annular booster outlet 504.

The booster 500 includes a rear body 620 having the booster inlet 502. The rear body 620 is disposed in an opposite direction to the front body 510.

The booster 500 includes a circumference body 560 disposed on a circumference of the front body 510.

The circumference body 560 is disposed in the circumference of the front body 510. The booster outlet 504 is formed between the circumference body 560 and the front body 510.

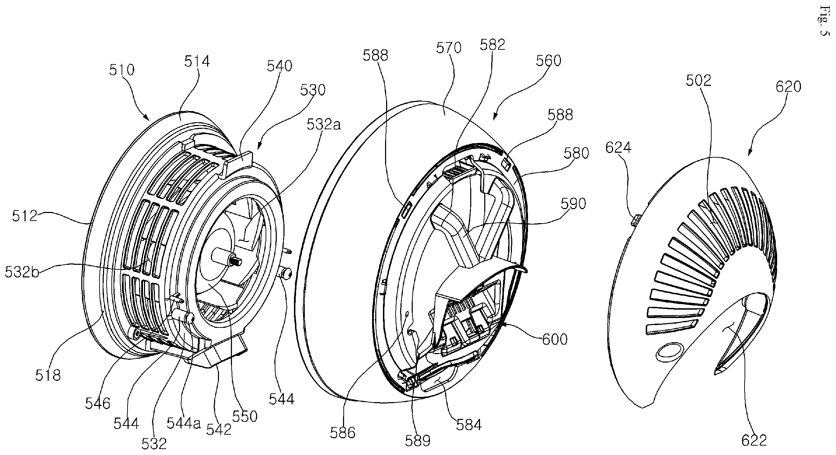

Referring to Fig. 5, a configuration of the booster is described.

The booster 500 includes the front body 510, the circumference body 560 disposed on the circumference of the front body 510, and the rear body 620 disposed at an opposite side to the front body 510 based on the circumference body 560.

The booster 500 includes a fan assembly 530 disposed on the rear of the front body 510.

The front body 510 has a space in which a display is disposed therein. A lamp which irradiates light toward the booster discharge path 506 to be described below may be disposed inside the front body 510.

The front body 510 includes a front wall 512 disposed to be exposed forward.

The front body 510 includes a first inner guide wall 514 extended to the rear from an outer peripheral end of the front wall 512. The first inner guide wall 514 may form the booster discharge path 506 jointly with a second inner guide wall 572 described below.

A transmission member 518 which irradiates the light generated by the lamp to the booster discharge path 506 may be disposed on a rear surface of the front body 510.

The fan assembly 530 includes a fan housing 532 disposed on the rear of the front body 510. The fan assembly 530 includes a booster fan 550 rotatably disposed inside the fan housing 532. The fan assembly 530 includes a booster fan motor 552 disposed inside the fan housing 532 and rotating the booster fan 550.

The fan housing 532 has a space in which the booster fan 550 is disposed. The fan housing 532 has a housing suction port 532a formed on the rear thereof. A housing discharge port 532b is formed on a circumferential surface of the fan housing 532.

The fan housing 532 is connected to the front body 510 at a front side thereof. The fan housing 532 has the housing suction port 532a formed on the rear thereof. The fan housing 532 has the housing discharge port 532b formed on the circumferential surface thereof.

The fan assembly 530 includes a locking jaw 540 protruding to the rear to be connected to the circumference body 560. The locking jaw 540 is disposed on the rear of the fan housing 532. The locking jaw 540 has a structure of protruding to the rear on the rear surface of the fan housing 532. The locking jaw 540 has a structure of protruding to the rear on the rear surface of the fan housing 532 and being bent to the upper side.

The fan assembly 530 includes a terminal connector 542 disposed to penetrate the circumference body 560 and electrically connected to the body 100. The terminal connector 542 is disposed on the rear of the fan housing 532.

The terminal connector 542 is disposed in a different direction from the locking jaw 540. The terminal connector 542 is disposed to be spaced apart from the locking jaw 540.

The fan assembly 530 includes a fastening boss 544 penetrating the circumference body 560 and coupled to the rear body 620. The fastening boss 544 is fastened to the rear body 620 through a separate fastening member.

The fan assembly 530 includes a guide post 546 which is inserted into a guide hole 586 formed in the circumference body 560. The guide post 546 is extended in line with the fastening boss 544. The guide post 546 protrudes to the rear on the rear surface of the fan housing 532.

Each of the locking jaw 540 and the terminal connector 542 of the fan assembly 530 is locked to the circumference body 560, so the front body 510 and the circumference body 560 may be coupled to each other. That is, when the locking jaw 540 and the terminal connector 542 are separated from the circumference body 560, the fan assembly 530 and the circumference body 560 may be separated from each other.

The fastening boss 544 has a structure of protruding to the rear on the rear surface of the fan housing 532. The front body 510 includes a pair of fastening bosses 544 disposed to be spaced apart from each other.

The circumference body 560 is disposed on the circumference of the fan housing 532. The circumference body 560 is disposed to be spaced apart from the circumference of the fan housing 532.

The circumference body 560 may include a circumference wall 570 disposed on the circumference of the fan housing 532.

The circumference body 560 may have a locking groove 582 in which the locking jaw 540 is disposed on the rear.

The circumference body 560 may have a connection hole 584 formed to be penetrated by the terminal connector 542 on the rear. The connection hole 584 may be opened in a direction in which the terminal connector 542 is extended.

The circumference body 560 may include the rear wall 580 extended to the inner side on the rear of the circumferential wall 570. The rear wall 580 may be formed in a ring shape.

The locking groove 582 may be formed on the rear wall 580. The connection hole 584 may be formed on the rear wall 580.

A mounting groove 588 on which the rear body 620 is mounted is formed on the rear wall 580. A rear body hook 624 formed in the rear body 620 may be inserted into the mounting groove 588.

A booster connector 600 mounted on the booster coupler 200 of the body 100 is disposed on the rear wall 580. The booster connector 600 may be disposed at an inner side of the rear wall 580.

A bridge 590 may be disposed on the rear wall 580, which connects one side of the rear wall 580 and one side of the booster connector 600. The circumference body 560 may include a pair of bridges 590 connecting the rear wall 560 and the booster connector 600.

A pair of bridges 590 may be disposed so that a separation interval therebetween is increased toward the rear wall 580 from the booster connector 600.

A penetration hole 589 penetrated by the fastening boss 544 is formed on the rear wall 580. A guide hole 586 into which the guide post 546 is inserted is formed on the rear wall 580.

The rear body 620 is disposed on the rear of the circumference body 560. The rear body 620 is separated to the rear of the circumference body 560.

The rear body 620 may have a shape of being convex to the rear. The booster inlet 502 is formed in the booster 620. The rear body 620 may have an opening 622 at the area where the booster connector 600 is disposed.

A plurality of booster inlets 502 may be formed in the rear body 620. The plurality of booster inlets 502 may be disposed to be spaced in the circumferential direction. The plurality of booster inlets 502 may be formed radially.

The rear body 620 may include a rear body hook 624 protruding to the front to be coupled to the circumference body 560. The rear body hook 624 may be inserted into the mounting groove 588 formed in the circumference body 560.

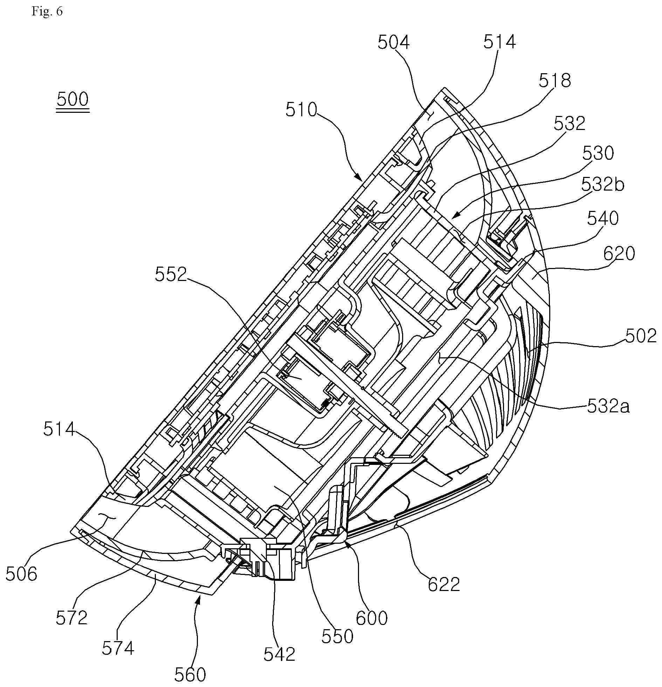

Referring to Fig. 6, an internal configuration of the booster is described.

The front body 510 is disposed to face a direction in which the booster outlet 504 is opened. The front wall 512 of the front body 510 may have a flat surface. The front wall 512 may form the display.

The printed circuit board may be disposed inside the front body 510. A plurality of lamps 520 may be disposed inside the front body 510. A transmission member 518 which irradiates light generated by the lamp 520 to the booster discharge path 506 may be disposed on the rear of the front body 510.

The fan assembly 530 is disposed on the rear of the front body 510. The fan assembly 530 may have a structure of being fastened to the rear of the front body 510.

The front body 510 includes the first inner guide wall 514 on the circumferential surface thereof. The first inner guide wall 514 may have a shape in which a diameter becomes larger toward the front wall on the rear of the front body 510.

The booster fan 550 may adopt a mixed flow fan. The booster fan 550 may have a structure in which the fan suction port is formed in a direction in which a rotary axis is extended and the fan discharge port is formed in a centrifugal direction.

Accordingly, air which flows in a direction in which the rear body 620 is disposed may be discharged in the centrifugal direction. The booster fan motor 552 rotating the booster fan 550 may be disposed between the booster fan 550 and the front body 510.

The fan housing 532 may have a space in which the booster fan 550 rotates. The fan housing 532 may have a housing suction port 532a formed in a direction in which the fan suction port of the booster fan 550 is formed. The fan housing 532 may have the housing discharge port 532b formed on a circumference wall in which the fan discharge port is formed.

Accordingly, air is introduced on the rear by the rotation of the booster fan 550, and air is discharged in a circumferential direction of the booster fan 550.

The circumference body 560 is disposed on the circumference of the fan assembly 530 and the front body 510. The circumference body 560 includes an outer wall 574 disposed at an outer side of the circumference of the booster 500. The circumference body 560 includes the second inner guide wall 572 which guides the air discharged through the housing discharge port 532b of the fan housing 532 to the booster outlet 504.

The second guide wall 572 is disposed to be spaced apart from the first inner guide wall 514. The second guide wall 572 is disposed to be spaced apart from the circumference of the fan housing 532. The second inner guide wall 572 may form the booster discharge path 506 jointly with the first inner guide wall 514.

The booster discharge path 506 may have a shape of being bent to the front. The booster discharge path 506 may have a shape in which a cross-section of the path is reduced toward the booster outlet 504 from the housing discharge port 532b.

The booster outlet 504 may guide the air discharged in the centrifugal direction from the fan housing 532 in a vertical direction.

The locking jaw 540 disposed in the fan housing 532 is disposed to be inserted into the locking groove 582 formed in the circumference body 560. The locking jaw 540 is disposed to penetrate the locking groove 582, and disposed to be in contact with the rear wall of the circumference body 560.

The terminal connector 542 disposed in the fan housing 532 is disposed to penetrate the connection hole 584.

The terminal connector 542 disposed in the fan housing 532 and the booster connector 600 disposed in the circumference body 560 are disposed at the opening 622 of the rear body 620. Accordingly, the terminal connector 542 and the booster connector 600 are disposed to be exposed to the outside even in a state in which the rear body 620 is disposed at one side of the circumference body 560.

The rear body 620 may form a continuous surface jointly with the outer wall 574 of the circumference body 560. Accordingly, some of the air discharged from the body 100 may flow along the rear body 620, and the outer wall 574 of the circumference body 560.

The booster outlet 504 formed in the rear body 620 is extended radially. Accordingly, a surface on which the booster outlet 504 is not formed may form a continuous surface toward the circumference body 560.

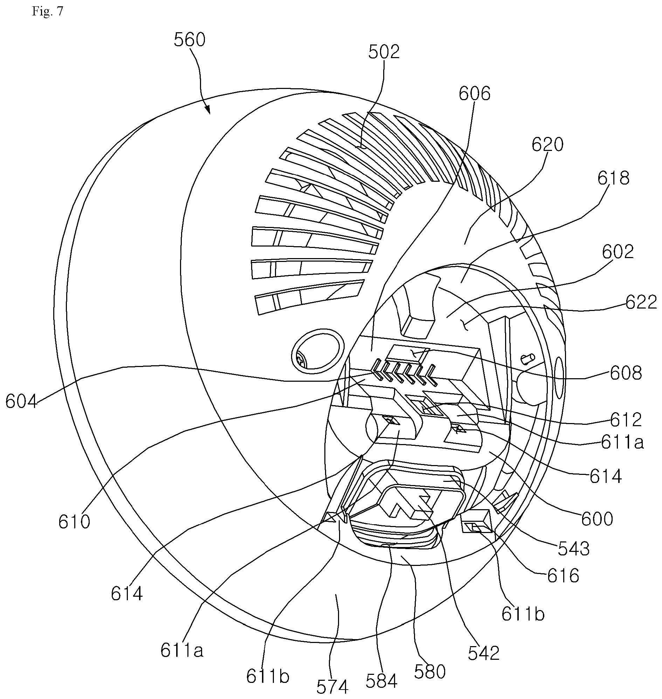

Hereinafter, the rear of the booster is described with reference to Fig. 7.

The rear body 620 may have a shape of being convex to the rear. The rear body 620 may have the opening 622 formed at the lower side thereof. A plurality of booster inlets 502 are formed in the rear body 620.

The booster inlet 502 may be formed radially in an area in which the opening 622 is not formed. The booster connector 600 of the circumference body 560 and the terminal connector 542 of the fan housing 532 are disposed at the opening 622 of the rear body 620 to be exposed.

The circumference body 560 includes the outer wall 574 disposed at the area exposed to the outside. The circumference body 560 may include the rear wall 580 extended to the inner side on the rear of the outer wall 574.

The booster connector 600 is disposed at a lower portion of the rear wall 580. The rear wall 580 includes the booster connector 600 extended to the upper side at the lower portion and coupled to the body 100.

The connector hole 584 penetrated by the terminal connector 542 is formed on the rear wall 580.

The booster connector 600 may have a shape of protruding to the upper side at the lower portion of the rear wall 580. A plurality of horizontal holes 612, 614, and 616, and a vertical hole 608 may be formed in the booster connector 600 to be coupled to the booster coupler 200.

The booster connector 600 includes a fixation wall 618 which fixes the placement of the booster 500 while being mounted on the booster coupler 200. While the booster connector 600 is mounted on the booster coupler 200, the fixation wall 618 may be disposed to be in contact with an outer circumference of the booster coupler 200.

The booster connector 600 includes an extension wall 602 disposed in line with the rear wall 580 and extended to the upper side at the lower portion of the rear wall 580. The fixation wall 618 has a structure of protruding to the rear on an upper end and both side ends of the extension wall 602.

A partial surface of the booster coupler 200 may be disposed to be in contact with the extension wall 602 and the fixation wall 618.

A fixation groove 604 having a groove on the rear is formed on the extension wall 602 of the booster connector 600. A partial configuration of the booster coupler 200 may be inserted into the fixation groove 604.

The booster connector 600 includes a vertical wall 610 which forms a vertical surface to the ground so that the fixation groove 604 is formed on the extension wall 602. The booster connector 600 includes a horizontal wall 606 which forms a horizontal surface to the ground so that the fixation groove 604 is formed on the extension wall 602. The horizontal wall 606 is disposed at an upper end of the vertical wall 610.

One or more horizontal holes 612, 614, and 616 are formed on the vertical wall 610.

The booster connector 600 includes an additional vertical wall 611a having a surface which is in line with the vertical wall 610, and spaced to the front of the vertical wall 610. A lower end of the additional vertical wall 611a may have a shape of being bent to the front.

As the additional vertical wall 611a is spaced to the front of the vertical wall 610, an additional fixation groove may be formed at an area which forms the additional vertical wall 611a.

A first horizontal hole 612 may be formed on the vertical wall 610. A pair of additional vertical walls 611a may be provided, which are disposed in left and right directions based on the first horizontal hole 612. A second horizontal hole 614 is formed on each of a pair of additional vertical walls 611a.

The first horizontal hole 612 may be disposed between a pair of second horizontal holes 614. An area of the first horizontal hole 612 may be formed to be larger than an area of each of a pair of second horizontal holes 614.

A third horizontal hole 616 may be formed on the rear wall 580. An auxiliary vertical wall 611b may be formed in the area of the rear wall 580 in which the third horizontal hole 616 is formed. The auxiliary vertical wall 611b may have a surface which is in line with the vertical wall 610.

A pair of auxiliary vertical walls 611b in which the third horizontal hole 616 is formed may be disposed on the rear wall 580. A pair of auxiliary vertical walls 611b are disposed below the vertical wall 610. A pair of auxiliary vertical walls 611b are disposed on the front of a pair of additional vertical walls 611a.

A distance at which a pair of auxiliary vertical walls 611b are spaced apart from each other is formed to be larger than the distance at which a pair of additional vertical walls 611a are spaced apart from each other.

A pair of third horizontal holes 616 are disposed below a pair of second horizontal holes 614. A distance at which a pair of third horizontal holes 616 are spaced apart from each other is formed to be larger than the distance at which a pair of second horizontal holes 614 are spaced apart from each other.

The connection hole 584 penetrated by the terminal connector 542 is disposed between a pair of third horizontal holes 616.

The terminal connector 542 protrudes to the lower side in the vertical direction through the connection hole 584. The terminal connector 542 includes a connector cover 543 disposed on at least a part of the outer circumference of the terminal connector 542. The connector cover 543 has a structure of being disposed in line with the vertical wall 610 and extended to the lower side.

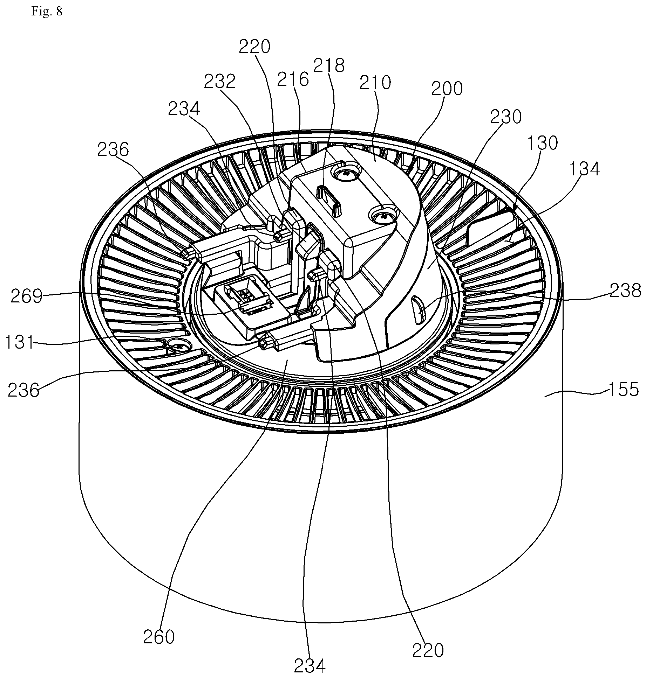

Referring to Fig. 8 the booster coupler disposed at the upper portion of the body is described.

The annular upper outlet 134 is formed at the inner side of the upper cover 155. The annular upper outlet 134 is formed between the upper cover 155 and the booster coupler 200.

The upper outlet 134 may mean an area where air flown by the upper fan 168 is discharged to the outside of the body 100. The upper outlet 134 may be a top area of the upper cover 155. Further, the upper outlet 134 may include an opening area formed on the upper outlet cover 130 disposed at a top portion of the upper cover 155.

The upper outlet cover 130 (or "outlet cover") is fixedly disposed on the top portion of the upper cover 155. The upper outlet cover 130 may be fixed to the upper cover 155 or the booster coupler 200. The upper outlet cover 130 may be fixed to the booster coupler 200 through an outlet cover screw 131 (or "fastener"). The outlet cover 130 is coupled to the booster coupler 200 through a fastener 131 disposed in front of the booster coupler 200. The outlet cover 130 is fastened to the second support body 270 through the fastener 131.

The booster coupler 200 is disposed at the inner side of the upper cover 155. The booster coupler 200 may be disposed to be spaced apart the inner side of the upper cover 155.

The booster coupler 200 has a plurality of protrusions protruding in a vertical direction or a horizontal direction so as to be coupled to the booster 500, which are disposed therein. The plurality of respective protrusions may be positioned in different directions, and may protrude in different directions.

The booster coupler 200 includes a vertical protrusion 218 protruding in the upper direction. The booster coupler 200 includes a plurality of horizontal protrusions 232, 234, and 236 protruding in the horizontal direction. The plurality of horizontal protrusions 232, 234, and 236 may be disposed at different locations.

The plurality of horizontal protrusions 232, 234, and 236 include a first horizontal protrusion 232. The plurality of horizontal protrusions 232, 234, and 236 include a pair of second horizontal protrusions 234 disposed to be spaced at both sides based on the first horizontal protrusion 232.

The booster coupler 200 includes a fixation body 210 in which the vertical protrusion 218 is disposed. The booster coupler 200 includes a movable body 230 in which the plurality of horizontal protrusions 232, 234, and 236 are disposed.

The movable body 230 is disposed to move relatively to the fixation body 210. Accordingly, as the movable body 230 moves, the location of each of the plurality of horizontal protrusions 232, 234, and 236 may also be changed. A grip 238 is disposed at one side of the movable body 230 which may be used to change the placement of the movable body 230.

The fixation body 210 includes a fixation protruding portion 216 which protrudes to the upper side so as to maintain the state in which the booster 500 is mounted. Further, the fixation protruding portion 216 includes an additional protruding portion 220 which protrudes additionally in the horizontal direction.

The vertical protrusion 218 may protrude on an upper surface of the fixation protruding portion 216. The first horizontal protrusion 232 may protrude to a front surface of the fixation protruding portion 216. The first horizontal protrusion 232 may protrude to the front of the fixation protruding portion 216 according to the placement of the movable body 230.

The second horizontal protrusion 234 may protrude to a groove formed at the additional protruding portion 220. The second horizontal protrusion 234 may protrude to the front of the additional protruding portion 220 according to the placement of the movable body 230.

The fixation protruding portion 216 may be inserted into the fixation groove 604 of the booster 500. The additional protruding portion 220 may be disposed to be in contact with the additional vertical wall 611a of the booster 500.

The booster coupler 200 includes first support bodies 250 and 260 to which the fixation body 210 is coupled. The first support bodies 250 and 260 may rotate in the circumferential direction. The fixation body 210 is fixedly disposed on the first support bodies 250 and 260. The movable body 230 is disposed between the fixation body 210 and the first support bodies 250 and 260. The movable body 230 is disposed in the fixation body 210 to move in front and rear directions. A spring for restoring the placement of the movable body 230 may be disposed between the movable body 230 and the fixation body 210.

The booster coupler 200 includes a corresponding terminal 269 connected to the terminal connector 542 of the booster 500. The corresponding terminal 269 may be disposed between a pair of third horizontal protrusions 236.

The corresponding terminal 269 may be disposed on the first support bodies 250 and 260.

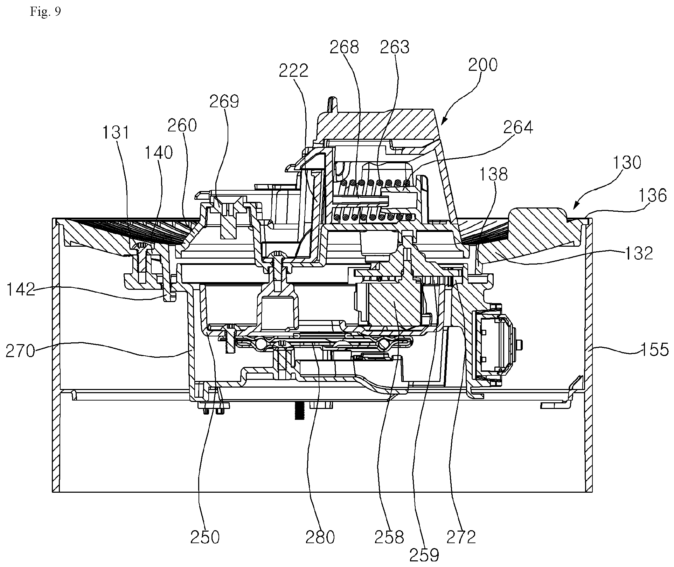

Referring to Fig. 9, components of the upper outlet cover and the booster coupler, and coupling relationships thereof are described.

The upper cover 155 has a cylindrical structure.

The top portion of the upper cover 155 and an outer peripheral end of the upper outlet cover 130 may be disposed to be in contact with each other.

The upper outlet cover 130 includes a plurality of upper outlet grills 132 extended radially. The upper outlet cover 130 includes a plurality of outer cover rims 136 connecting outer peripheral ends of the plurality of upper outer grills 132. The outer covering rim 136 has the ring shape. The outer cover rim 136 may be seated on the upper side of the upper cover 155.

The upper outlet cover 130 includes inner cover rims 138 connecting inner peripheral ends of the plurality of upper outer grills 132. The inner cover rim 138 has a ring shape with a smaller diameter than the outer cover rim 136. A cover hook 142 protruding to the lower side is disposed on the inner cover rim 138.

The upper outlet cover 130 includes a screw coupler 140 on which the outer cover screw 131 is mounted.

The cover hook 142 is mounted on one side of the booster coupler 200. The screw coupler 140 is fixed to one side of the booster coupler 200.

The booster coupler 200 includes a second support body 270 having a space in which the first support bodies 250 and 260 are disposed. The first support bodies 250 and 260 are rotatably disposed on the second support body 270. Bearings 280 are disposed between the first support bodies 250 and 260, and the second support body 270.

The bearing 280 may have a shape in which a center is opened. Accordingly, an electrical wire on which current flows may be disposed through the center of the bearing 280.

The upper outlet cover 130 is connected to the second support body 270. The upper outlet cover 130 is fixedly disposed on the second support body 270.

A rack gear 272 is disposed on one side surface of the second support body 270.

The first support bodies 250 and 260 are rotatably disposed at the inner side of the second support body 270.

The first support bodies 250 and 260 have a rotary motor 258 and a rotary gear 259 disposed therein. The rotary gear 259 rotates by the rotary motor 258. The rotary gear 259 is disposed to engage with the rack gear 272.

The rotary motor 258 is fixedly disposed on the first support bodies 250 and 260. Accordingly, the rotary gear 259 rotates by operating the first support bodies 250 and 260, so the first support bodies 250 and 260 may rotate inside the second support body 270.

The corresponding terminals 269 are disposed on the upper surfaces of the first support bodies 250 and 260. The first support bodies 250 and 260 may be fastened with a stopper wall 222 inserted into a guide wall insertion groove 266 with a screw. A spring support 264 is disposed on the upper surface of the first support bodies 250 and 260. A spring 263 is disposed between the spring protrusion 268 and the spring support 264 disposed at the inner side of the movable body 230. The spring 263 may restore the replacement of the movable body 230.

The first support bodies 250 and 260 may include a first lower support body 250 disposed inside the second support body 270, and a first upper support body 260 disposed above the first lower support body 250.

The first lower support body 250 is disposed above the bearing 280. The rotary 258 is fixedly disposed on the first lower support body 250. The first upper support body 260 is coupled to the first lower support body 250. The corresponding terminal 269 is disposed on the first upper support body 260. The spring support 264 is disposed on the first upper support body 260.

A body fastening boss 262 is disposed on the first upper support body 260.

The stopper wall 222 may be disposed to be in contact with the movable body 230. The stopper wall 222 may limit forward movement of the movable body 230. The stopper wall 222 may perform a stopper function of the movable body 230.

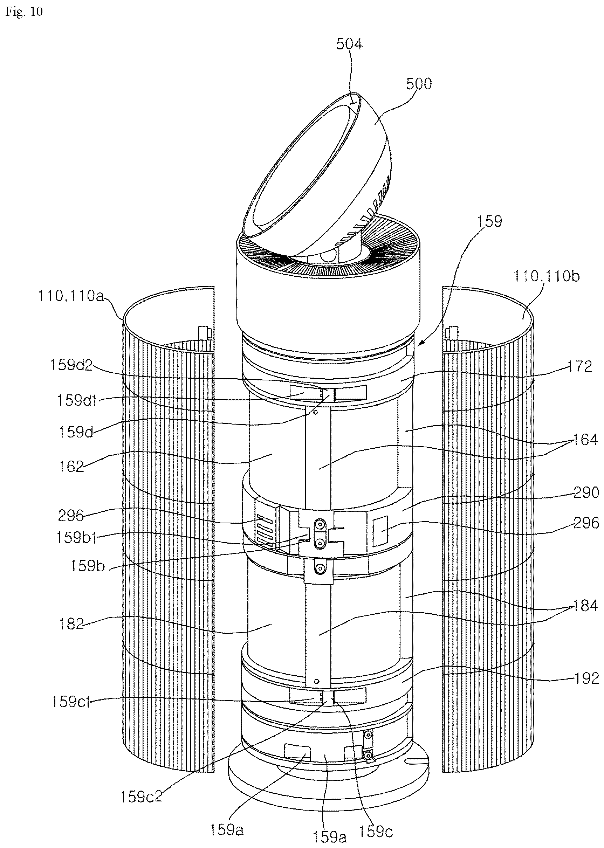

Referring to Fig. 10, an air purifier in which the inlet cover 110 is separated is described.

The inlet cover 110 may be separated in a direction faced by the booster outlet 504 of the booster 500 and an opposite direction faced by the booster outlet 504 of the booster 500 .

When the direction faced by the booster 500 is set to the front, the inlet cover 110 may be separated into the front and the rear of the air purifier.

The inlet cover 110 includes a first inlet cover 110a disposed on the front of the air purifier and a second inlet cover 110b disposed on the rear of the air purifier.

The body 100 includes an internal body 159 disposed inside the inlet cover 110. The internal body 159 may include the control box 290, the upper fan housing 172, and the lower fan housing 192.

The internal body 159 may include the upper filter frame 164 connecting the control box 290 and the upper fan housing 172. The internal body 159 may include the lower filter frame 184 connecting the control box 290 and the lower fan housing 192.

The first inlet cover 110a is disposed on the front of the internal body 159. The first inlet cover 110a is separated to the front of the internal body 159. The second inlet cover 110b is disposed on the rear of the internal body 159. The second inlet cover 110b is separated to the rear of the internal body 159.

The control box 290, the upper fan housing 172, and the lower fan housing 192 are disposed at the inner side of the inlet cover 110. The upper filter 162 is disposed between the upper fan housing 172 and the control box 290. The lower filter 182 is disposed between the lower fan housing 192 and the control box 290.

The upper fan housing 172 and the lower fan housing 192 are disposed to be symmetric to each other in the upper and lower directions based on the control box 290.

A plurality of mounting portions 159a, 159b, 159c, and 159d on which the inlet cover 110 is mounted are disposed in the internal body 159. At least one mounting portion 159a, 159b, 159c, and 159d is disposed in each of the upper fan housing 172, the lower fan housing 192, and the control box 290.

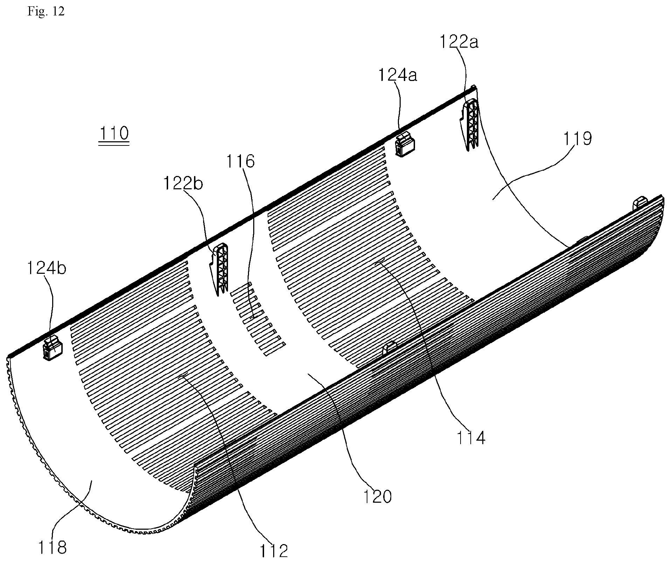

A plurality of guide grooves 159a1, 159b1, 159c1, and 159d1 are formed, which are in line with the plurality of mounting portions 159a, 159b, 159c, and 159d, respectively. A plurality of mounting protrusions 122a, 122b, 124a, and 124b (see Fig. 12) formed on the inlet covers 110a and 110b may be inserted into the plurality of guide grooves 159a1, 159b1, 159c1, and 159d1.

The internal body 159 includes first mounting portions 159a and 159b which limit upper and lower-direction movement of the inlet cover 110 when the inlet cover 110 is mounted. The internal body 159 includes second mounting portions 159c and 159d which limit front and rear-direction movement of the inlet cover 110 when the inlet cover 110 is mounted.

Second mounting portions 159c and 159d may be disposed above the first mounting portions 159a and 159b.

Each of the first mounting portions 159a and 159b may be provided as a pair of first mounting portions which are spaced in the circumferential direction. The pairs of first mounting portions 159a and 159b are in contact with the first inlet cover 110a and the second inlet cover 110b, respectively in the front and rear directions, respectively.

Each of the second mounting portions 159c and 159d may be provided as a pair of second mounting portions which are spaced in the circumferential direction. The pairs of second mounting portions 159c and 159d are in contact with the first inlet cover 110a and the second inlet cover 110b, respectively in the front and rear directions, respectively.

The first mounting portions 159a and 159b include a first lower mounting portion 159a and a first upper mounting portion 159b disposed above the first lower mounting portion 159a. The first lower mounting portion 159a is disposed at one side of the lower fan housing 192. The first upper mounting portion 159b is disposed at one side of the control box 290.

The second mounting portions 159c and 159d include a second lower mounting portion 159c and a second upper mounting portion 159d disposed above the second lower mounting portion 159c. The second lower mounting portion 159c is disposed at one side of the lower fan housing 192. The second upper mounting portion 159d is disposed at one side of the upper fan housing 172.

Each of the first lower mounting portion 159a and the second lower mounting portion 159c is disposed in the lower fan housing 192. The second lower mounting portion 159c is disposed above the first lower mounting portion 159a.

A distance at which the first lower mounting portion 159a and the second lower mounting portion 159c are spaced apart from each other in the upper and lower directions is formed to be larger than a distance at which the first upper mounting portion 159b and the second upper mounting portion 159d are spaced apart from each other in the upper and lower directions.

The first mounting portions 159a and 159b may have insertion grooves into which some components of the inlet cover 110 are inserted. The first mounting portions 159a and 159b may have insertion grooves which are opened in the front and the rear directions, and inserted with first mounting protrusions 122a and 122b of the inlet cover 110 to be described below.

The second mounting portions 159c and 159d may be coupled to the inlet cover 110 by a magnetic force. One of the second mounting portions 159c and 159d and the second mounting protrusions 124a and 124b may be a magnet. Further, the other one of the second mounting portions 159c and 159d and the second mounting protrusions 124a and 124b may be a corresponding structure coupled to the magnet.

Guide grooves 159a1, 159b1, 159c1, and 159d1 into which the first mounting protrusions 122a and 122b or second mounting protrusions 124a and 124b of the inlet cover 110 are inserted are formed at the first mounting portions 159a and 159b or the second mounting portions 159c and 159d.

The mounting portions include first mounting portions 159a and 159b at which first guide grooves 159a1 and 159b1 inserted with the first mounting protrusion 122a and 122b are formed, and second mounting portions 159c and 159d coupled to the second mounting protrusions 124a and 124b by the magnetic force.

The first guide grooves 159a1 and 159b1 are formed in the front and rear directions. The second guide grooves 159c1 and 159d1 which are in line with the first guide grooves 159a1 and 159b1 are formed at the second mounting portions 159c and 159d.

In the second mounting portions 159c and 159d, magnets 159c2 and 159d2 may be disposed in spaces where the second guide grooves 159c1 and 159d1 are formed.

A plurality of sensors 296 are disposed on the circumferential surface of the control box 290. The plurality of sensors 296 disposed on the circumference of the control box 290 are disposed to be spaced apart from each other in the circumferential direction.

The plurality of sensors 296 may include a dust sensor that senses dust. The plurality of sensors 296 may include a gas sensor that senses odors or harmful gases.

The inlet cover 110 has the upper inlet 112 through which air flows to the upper filter 162. The inlet cover 110 has the lower inlet 114 through which air flows to the lower filter 182. A plurality of sensor holes 116 which are opened at areas where the plurality of sensors 296 are disposed, respectively are formed on the inlet cover 110.

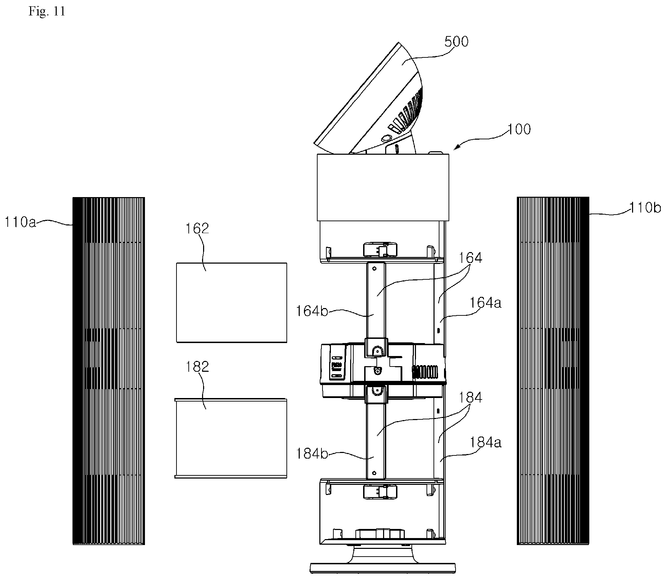

Referring to Fig. 11, a direction in which the inlet cover is separated and a direction in which the filter is separated are described.

The booster 500 is disposed at the upper side of the body 100. The booster 500 may be disposed to face the front. The booster 500 may be disposed to face a front upper side. Accordingly, the air which flows to the upper side through the upper outlet 134 of the body 100 may flow to the front upper side through the booster 500.

The first inlet cover 110a may be separated to the front faced by the booster 500. The first inlet cover 110a may be disposed on the front faced by the booster 500.

The second inlet cover 110b may be separated to the rear faced by the booster 500. The second inlet cover 110b may be disposed on the rear faced by the booster 500.

Each of the first inlet cover 110a and the second inlet cover 110b may be individually mounted on the internal body. The first inlet cover 110a and the second inlet cover 110b may be individually mounted on the lower fan housing 192 and the upper fan housing 172, respectively.

The upper filter 162 and the lower filter 182 may be separated to the front of the internal body 159 in a state in which the first inlet cover 110a is separated. Each of the upper filter 162 and the lower filter 182 may be separated to the front of the body 100 in the state in which the first inlet cover 110a is separated.

The upper filter frame 164 is disposed to withdrawal the upper filter 162 in the direction faced by the booster outlet 504. The upper filter frame 164 is disposed to withdrawal the upper filter 162 in the direction faced by the booster 500. Here, the direction faced by the booster 500 may be the direction faced by the booster outlet 504.

The upper filter frame 164 is disposed on the rear, and in the left and right directions of the upper filter 162. Accordingly, the upper filter 162 may be inserted from the front of the body 100, or withdrawn to the front of the body 100.

The lower filter frame 184 is disposed to withdrawal the lower filter 182 in the direction faced by the booster outlet 504. The lower filter frame 184 is disposed to withdrawal the lower filter 182 in the direction faced by the booster 500.

The lower filter frame 184 is disposed on the rear, and in the left and right directions of the lower filter 182. Accordingly, the lower filter 182 may be inserted from the front of the body 100, or withdrawn to the front of the body 100.

Both ends of the first inlet cover 110a are disposed to face a pair of first side frames 164b or a pair of second side frames 184b, respectively. Accordingly, when the first inlet cover 110a is removed, the upper filter 162 or the lower filter 182 may be exposed to be withdrawn to the front.

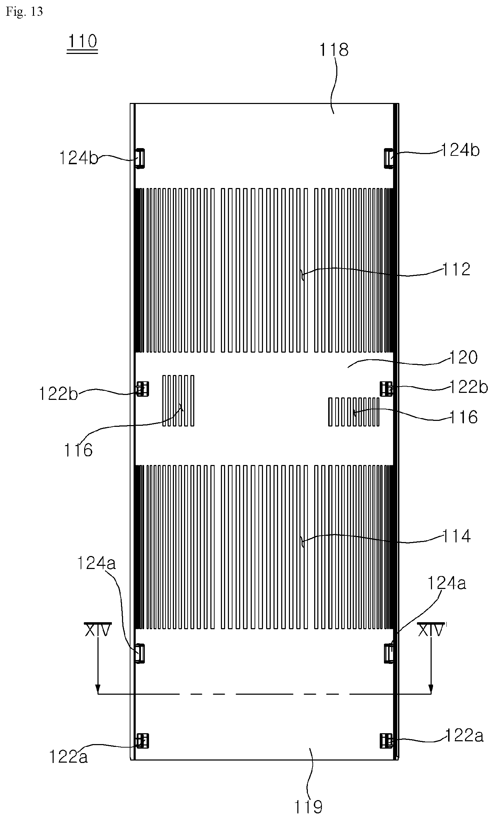

Referring to Figs. 12 and 13, the inlet cover 110 is described.

The first inlet cover 110a and the second inlet cover 110b have a structure of being symmetric to each other. Accordingly, the inlet cover 110 to be described below may be applied to both the first inlet cover 110a and the second inlet cover 110b.

The inlet cover 110 is formed in a semi-cylindrical shape. The inlet cover 110 has the upper inlet 112 and the lower inlet 114. The upper inlet 112 and the lower inlet 114 are disposed to be spaced apart from each other.

The inlet cover 110 includes a cover lower part 119 disposed below the lower inlet 114 and an cover upper part 118 disposed above the upper inlet 112.

The first mounting protrusions 122a and 122b coupled to the first mounting portions 159a and 159b of the internal body 159 are disposed on the cover lower part 119. The second mounting protrusions 124a and 124b coupled to the second mounting portions 159c and 159d of the internal body 159 are disposed on the cover lower part 119.

The first mounting protrusions 122a and 122b may have a structure of being inserted into the grooves where the first mounting portions 159a and 159b are formed. The first lower mounting protrusion 122a inserted into the first lower mounting portion 159a of the internal body 159 is disposed on the cover lower part 119.

The second mounting protrusions 124a and 124b coupled to the second mounting portions 159c and 159d of the internal body 159 are disposed on the cover upper part 118. The first upper mounting protrusion 122b inserted into the first upper mounting portion 159b of the internal body 159 is disposed on the cover upper part 118.

The inlet cover 110 includes a middle cover 120 disposed between the lower inlet 114 and the upper inlet 112.

One or more sensor holes 116 are formed on the middle cover 120. As illustrated in Fig. 13, it is also possible that two or more sensor holes 116 having different sizes are formed. A plurality of sensor holes 116 are disposed to be spaced apart from each other in the circumference direction.

The first mounting protrusions 122a and 122b coupled to the first mounting portions 159a and 159b of the internal body 159 are disposed on the middle cover 120. The first upper mounting protrusion 122b coupled to the first upper mounting portion 159b of the internal body 159 is disposed on the middle cover 120.

The cover upper part 118 is disposed to cover the circumference of the upper fan housing 172. The cover lower part 119 is disposed to cover the circumference of the lower fan housing 192. The cover middle part 120 is disposed to cover the circumference of the control box 290.

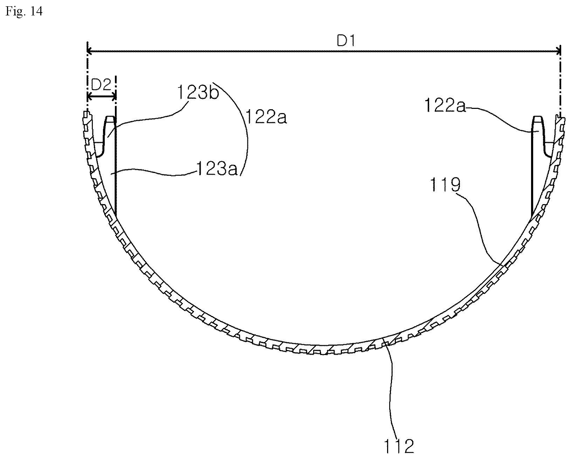

Referring to Fig. 14, the first mounting protrusion of the inlet cover is described.

The first mounting protrusions 122a and 122b are disposed on the cover lower part or the cover middle part 120. The first mounting protrusions 122a and 122b have a structure of being extended in the front and rear directions. When the inlet cover 110 is the first inlet cover 110a disposed on the front, the first mounting protrusions 122a and 122b are extended to the rear. When the inlet cover 110 is the second inlet cover 110b disposed on the rear, the first mounting protrusions 122a and 122b may be extended to the front.

A distance D2 at which the first mounting protrusions 122a and 122b protrude toward the inner side from left and right end portions of the inlet cover 110 may be formed as a size which is 1/10 equal to or smaller than a diameter D1 of the inlet cover 110.

Ranges in which the first mounting protrusions 122a and 122b protrude in the front and rear directions may be formed within ranges in which the left and right end portions of the inlet cover 110 are disposed.

The first mounting protrusions 122a and 122b include an insert body 123a which protrudes in the left and right directions on an inner circumferential surface of the inlet cover 110, and an insert protrusion 123b which protrudes in the front and rear directions on the insert body 123a. The insert protrusion 123b may be disposed to be spaced apart from the inner circumference surface of the inlet cover 110.

The insert protrusion 123b is inserted into the first mounting portions 159a and 159b formed in the internal body 159. The insert protrusion 123b is inserted into the insertion grooves formed by the first mounting portions 159a and 159b.

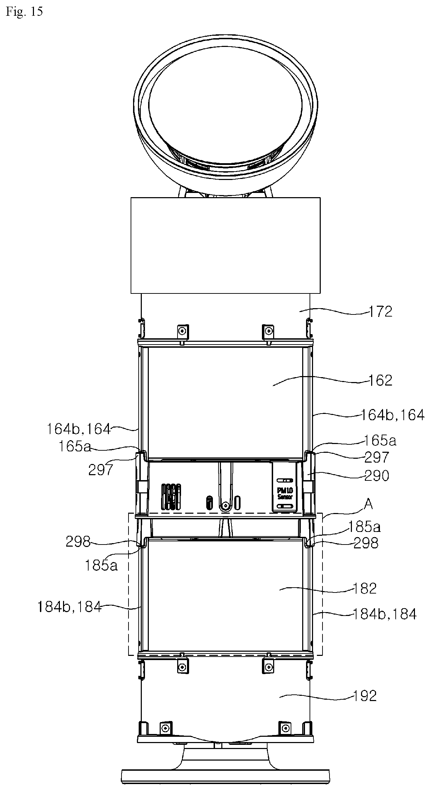

Referring to Fig. 15, the placement filter and the filter frame disposed around the filter are described.

When the inlet cover 110 is removed, the upper filter 162 or the lower filter 182 may be in a state in which the upper filter 162 or the lower filter 182 may be separated from the internal body 159. Even though only the inlet cover 110a is removed, the upper filter 162 or the lower filter 182 may be in the state in which the upper filter 162 or the lower filter 182 may be separated from the internal body 159.

The upper filter 162 is disposed between the upper fan housing 172 and the control box 290. The lower filter 182 is disposed between the lower fan housing 192 and the control box 290.

The upper filter frame 164 is disposed on the circumference of the upper filter 162. The upper filter frame 164 connects the upper fan housing 172 and the control box 290. The upper filter frame 164 has a space in which the upper filter 162 is disposed between the upper fan housing 172 and the control box 290.

The upper filter frame 164 includes a first rear frame 164a (or "rear frame") disposed on the rear of the upper filter 162, and a pair of first side frames 164b (or "pair of side frames") disposed in the left and right directions of the upper filter 162. A space penetrated by the electrical wire may be formed in the first rear frame 164a.

The first rear frame 164a includes a first rear frame free end connected to the control box 290. Each of a pair of first side frames 164b includes a first side frame free end 165a connected to the control box 290.

The control box 290 includes a pair of upper frame connectors 297 which protrude to the upper side so as to be connected to a pair of first side frames 164b. A pair of first side frame free ends 165a may be disposed at inner sides of a pair of upper frame connectors 297, respectively.

The lower filter frame 184 is disposed on the circumference of the lower filter 182. The lower filter frame 184 connects the lower fan housing 192 and the control box 290. The lower filter frame 184 has a space in which the lower filter 182 is disposed between the lower fan housing 192 and the control box 290.

The lower filter frame 184 includes a second rear frame 184a disposed on the rear of the lower filter 182, and a pair of second side frames 184b disposed in the left and right directions of the lower filter 182. A space penetrated by the electrical wire may be formed in the second rear frame 184a.

The second rear frame 184a includes a second rear frame end portion connected to the control box 290. Each of a pair of second side frames 184b includes a second side frame free end 185a connected to the control box 290.

The control box 290 includes a pair of lower frame connectors 298 which protrude to the lower side so as to be connected to a pair of second side frames 184b. A pair of second side frame free ends 185a may be disposed at inner sides of a pair of lower frame connectors 298, respectively.

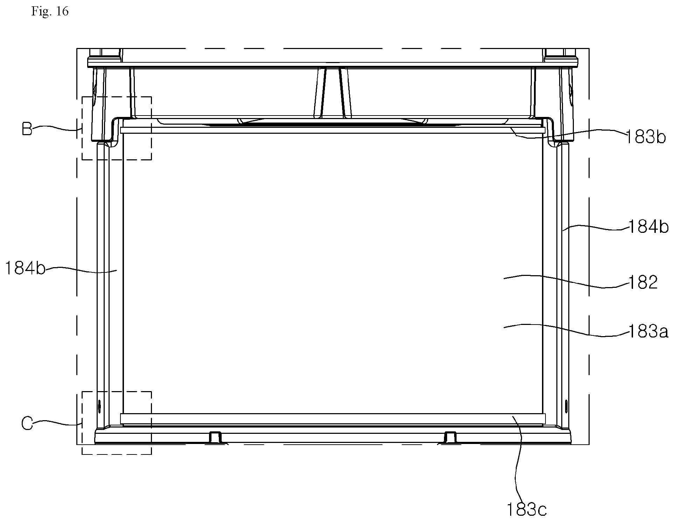

Referring to Fig. 16, configurations and placements of the lower filter and the lower filter frame are described.

Components of the lower filter 182, the lower filter frame 184, and the lower frame connector 298 may also be similarly applied to the upper filter 162, the upper filter frame 164, and the upper frame connector 297.

The components of the lower filter 182, the lower filter frame 184, and the lower frame connector 298 may be disposed to be symmetric to the components of the upper filter 162, the upper filter frame 164, and the upper frame connector 297 in the upper and lower directions.

The lower filter 182 includes a first filter plate 183b, a second filter plate 183c disposed to be spaced from the first filter plate 183b, and a filter body 183a disposed between the first filter plate 183b and the second filter plate 183c.

The first filter plate 183b and the second filter plate 183c may close upper and lower sides of the filter body 183a. The filter body 183a may have an annular pillar shape. The first filter plate 183b and the second filter plate 183c may be formed in the annular shape to be disposed at the upper side or the lower side of the filter body 183a.

An outer circumferential diameter of the first filter plate 183b may be formed to be larger than an outer circumferential diameter of the filter body 183a. An outer circumferential diameter of the second filter plate 183c may be formed to be larger than an outer circumferential diameter of the filter body 183a.

Air may flow toward the inner circumferential surface from the outer circumferential surface or toward the outer circumferential surface from the inner circumferential surface of the filter body 183a.

A pair of second side frames 184b are coupled to a pair of lower frame connectors 298, respectively. A pair of second side frames 184b are coupled to a pair of lower frame connectors 298, respectively.

Accordingly, in a state in which a pair of second side frames 184b are coupled to a pair of lower frame connectors 298, respectively, each of a pair of second side frames 184b forms an inner peripheral surface. In the state in which a pair of second side frames 184b are coupled to a pair of lower frame connectors 298, respectively, each of a pair of lower frame connectors 298 forms an outer peripheral surface.

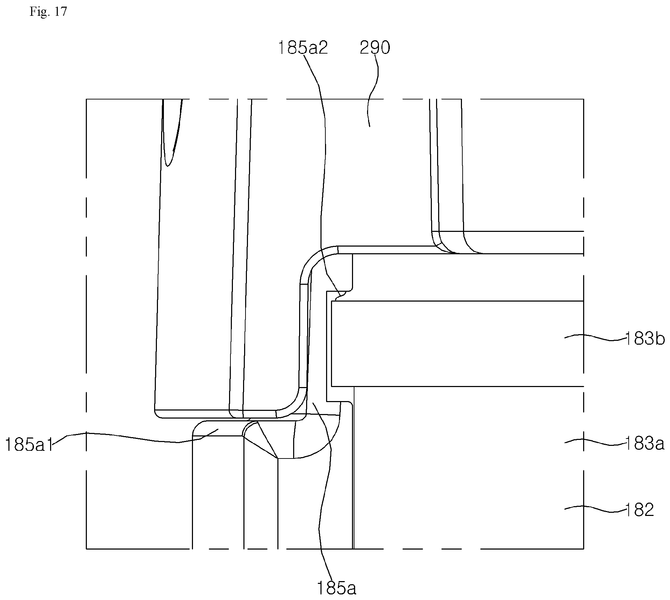

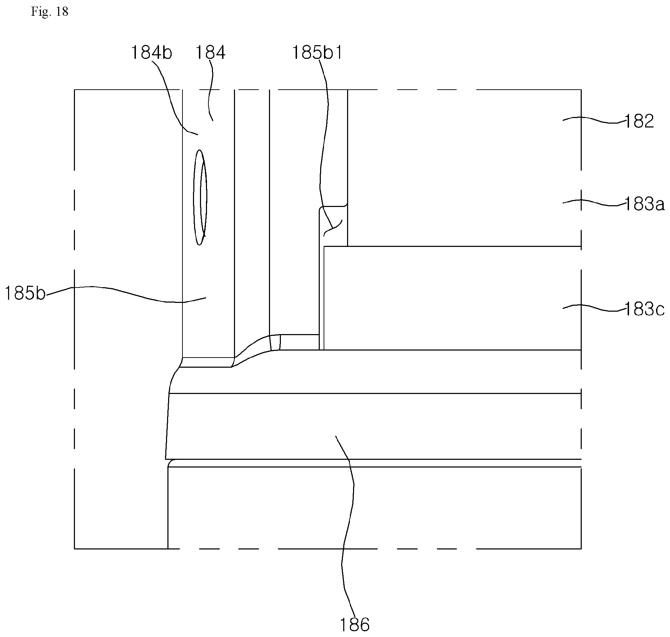

Referring to Figs. 17 and 18, a recess formed in the second side frame is described.

The second side frame 184b is connected to the lower suction panel 186. The second side frame 184b has a structure of protruding to the upper side from the lower suction panel 186.

The second side frame 184b includes a fixation end 185b which is an area connected to the lower suction panel 186 and a free end 185a connected to one side of the control box 290. Similarly, the first side frame 164b may also include the fixation end at an area connected to the upper suction panel 166 and the free end at an area connected to the control box 290.

Referring to Fig. 17, the second side frame 184b is coupled to the control box 290 on the free end 185a. The free end 185a of the second side frame 184b may mean an area disposed in a long range from the lower suction panel 186. Referring to Fig. 17, the free end 185a of the second side frame 184b may mean a top portion of the second side frame 184b.

The free end of the first side frame 164b may be a bottom portion where the first side frame 164b is connected to the control box 290.

An outer step 185a1 in which the lower frame connector 298 of the control box 290 is disposed is formed on the free end 185a of the second side frame 184b. The lower frame connector 298 is disposed above the outer step 185a1.

Accordingly, the lower frame connector 298 may be disposed on an outer circumference of the free end 185a of the second side frame 184b.

A first recess 185a2 recessed in an outer direction is formed on an inner peripheral surface of the free end 185a of the second side frame 184b. A depth at which the first recess 185a2 is recessed from the inner peripheral surface of the second side frame 184b is formed to be longer than a length of the first filter plate 183b which protrudes to the outer side from the filter body 183a.

A length of the first recess 185a2 formed in the upper and lower directions is formed to be longer than an upper and lower-direction thickness of the first filter plate 183b.

Referring to Fig. 18, The second side frame 184b is connected to the lower suction panel 186. The second side frame 184b and the lower suction panel 186 may be integrally formed.

The lower suction panel 186 may be disposed below the fixation end 185b of the second side frame 184b.

A second recess 185b1 recessed in the outer direction is formed on an inner peripheral surface of the free end 185b of the second side frame 184b.

A depth at which the second recess 185b1 is recessed to the outer side or a length of the second recess 185b1 which is formed in the upper and lower directions may be formed to be the same as that of the first recess 185a2. Accordingly, even though the lower filter 182 is disposed between the control box 290 and the lower suction panel 186, each of the first filter plate 183b and the second filter plate 183c is not in contact with the second side frame 184b.

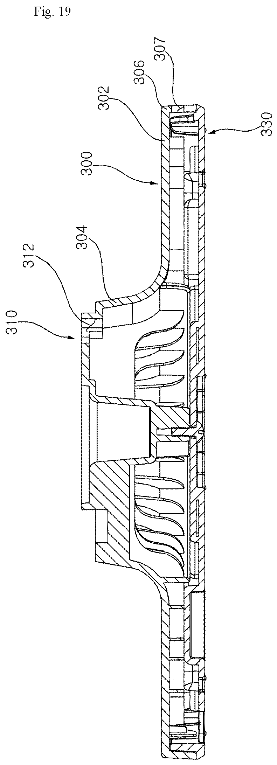

Referring to Fig. 19, a structure of the base is described.

The base 300 includes a base connector 310 coupled to the body 100. An upper electrical wire hole 312 penetrated by the electrical wire is formed on an upper surface of the base connector 310.

The base 300 includes a base plate 302 having a diameter which is larger than a diameter of the body 100 so as to support the body 100.

The base 300 includes a base support 304 which is extended to the upper side from the base plate 302. The base support 304 is extended to the upper side of the base plate 302. The base support 304 is extended to the upper side from a center of the base plate 302.

The base connector 310 is disposed on a top portion of the base support 304.

The base plate 302 has a structure of being extended in a radial direction on a bottom portion of the base support 304.

The base 300 includes a base circumference wall 306 extended to the lower side on an outer peripheral end of the base plate 302.

A lower electrical wire hole 307 (or "electrical wire hole")formed to be penetrated by the electrical wire is formed at one side of the base circumference wall 306. The lower electrical wire hole 307 is formed on the rear of the base 300. The lower electrical wire hole 307 is formed in a direction opposite to the direction faced by the booster 500. The lower electrical wire hole 307 is disposed in a direction opposite to the direction faced by the booster outlet 504.

A reinforcement plate 330 disposed at a lower side of the base 300 may be further included. The reinforcement plate 300 is disposed at the lower side of the base 300.

The reinforcement plate 330 may be disposed on an inner side of the base circumference wall 306.

While the preferred embodiments of the present disclosure have been illustrated and described above, the present disclosure is not limited to the aforementioned specific embodiments, various modifications may be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. An air purifier comprising:
a body (100) having an inlet (112) formed on an circumference surface thereof and an outlet (134) formed on an upper surface thereof; and
a booster (500) disposed on the body (100), and configured to discharge air toward one side in a circumferential direction through a booster outlet (504),
wherein the body (100) includes:
a fan (168) disposed in the body (100) and making air flow from the inlet to the outlet (134);
a fan housing (172) having a space in which the fan is disposed;and
a filter frame (164) extending downward from the fan housing (172), and supporting a space in which a filter (162) is disposed, and
wherein the filter frame (164) is disposed to withdraw the filter (162) in a direction faced by the booster outlet (504).

2. The air purifier of claim 1, wherein the filter frame (164) includes a rear frame (164a) disposed in a direction opposite to the direction faced by the booster outlet (504), and a pair of side frames (164b) disposed to be spaced apart from the rear frame (164a) in a circumferential direction and to be symmetric to each other to the left and right.

3. The air purifier of claim 1 or 2, wherein the body (100) further includes a first inlet cover (110a) disposed at a front side of the filter (162) and having the inlet (112), and a second inlet cover (110b) disposed at a rear side of the filter (162) and having the inlet (112).

4. The air purifier of claim 3, wherein each of the first inlet cover (110a) and the second inlet cover (110b) is individually mounted on the fan housing.

5. The air purifier of claim 3 or 4, wherein the first inlet cover(110a) is disposed toward a front side in direction in which the filter (162) is withdrawn.

6. The air purifier of one of claims 3 to 5, wherein the filter frame (164) includes a rear frame (164a) disposed in a direction opposite to the direction faced by the booster outlet (504), and a pair of side frames (164b) disposed to be spaced apart from the rear frame (164a) in a circumferential direction and to be symmetric to each other to the left and right, and
wherein both ends of the first inlet cover (110a) are disposed to face the one pair of side frames (164b), respectively.

7. The air purifier of one of claims 1 to 6, wherein the body includes a booster coupler (200) configured to couple or decouple the booster (500), and
wherein when the booster (500) is coupled to the booster coupler (200), the booster outlet (504) is disposed to face the front.

8. The air purifier of claim 7, wherein when the booster (500) is coupled to the booster coupler (200), the booster outlet (504) is formed to be inclined upward.

9. The air purifier of claim 7 or 8, wherein the booster coupler (200) rotates the booster within a range of each of the pair of side frames (164b).

10. The air purifier of one of claims 7 to 9, wherein the booster coupler (200) includes a second support body (270), and a first support body (250, 260) rotatably disposed on the second support body (270) and connected to the booster (500), and
wherein a rack (272) supporting movement of the first support body (250, 260) is formed to the rear on an inner peripheral surface of the second support body (270).

11. The air purifier of claim 10, wherein the body (100) further includes an outlet cover (130) disposed on a circumference of the booster coupler (200), and having the outlet (134), and
wherein the outlet cover (130) is coupled to the booster coupler (200) through a fastener (131)disposed in front of the booster coupler (200).

12. The air purifier of claim 11, wherein the outlet cover (130) is fastened to the second support body (270) through the fastener (131).

13. The air purifier of one of claims 1 to 12, wherein the body (100) further includes a base (300) disposed at a lower portion of the body (100), and
wherein an electrical wire hole (307) penetrated by an electrical wire in a direction opposite to the direction faced by the booster outlet (504) is disposed on the base (300).

14. The air purifier of one of claims 1 to 13, wherein the body (100) includes a control box (290) having electronic parts disposed therein, and
wherein a filter pressing plate (292) pressing one side of the filter is disposed in the control box(290).

15. The air purifier of one of claims 1 to 14, when dependent on claim 13, wherein the filter frame (164) includes a rear frame (164a) disposed in a direction opposite to the direction faced by the booster outlet, and a pair of side frames (164b) disposed to be spaced apart from the rear frame (164a) in a circumferential direction and to be symmetric to each other to the left and right, and
wherein the rear frame (164a) has a space penetrated by the electrical wire.
